# EUROPEAN PATENT SPECIFICATION

(11) **EP 3 925 877 B1**
(45) Date of publication and mention of the grant of the patent: **16.11.2022**
(21) Application number: 20382512.0
(22) Date of filing: 15.06.2020
(51) Int. Cl.: B25J 11/00, B25J 15/00, B64F 1/36, B25J 15/10, B64C 39/02

(54) **ROBOTIC DEVICE FOR CATCHING AND RELEASING DRONES, DRONE FOR USE WITH THE ROBOTIC DEVICE, SYSTEM COMPRISING THE ROBOTIC DEVICE AND THE DRONE, AND METHODS FOR CATCHING AND RELEASING THE DRONE BY MEANS OF THE ROBOTIC DEVICE**
ROBOTERVORRICHTUNG ZUM FANGEN UND FREIGEBEN VON DROHNEN, DROHNE ZUR VERWENDUNG MIT DER ROBOTERVORRICHTUNG, SYSTEM MIT DER ROBOTERVORRICHTUNG UND DER DROHNE, SOWIE VERFAHREN ZUM FANGEN UND FREIGEBEN DER DROHNE MITTELS DER ROBOTERVORRICHTUNG
DISPOSITIF ROBOTIQUE POUR LA CAPTURE ET LA LIBÉRATION DE DRONES, DRONE À UTILISER AVEC LE DISPOSITIF ROBOTIQUE, SYSTÈME COMPRENANT LE DISPOSITIF ROBOTIQUE ET LE DRONE ET PROCÉDÉS POUR LA CAPTURE ET LA LIBÉRATION DU DRONE AU MOYEN DU DISPOSITIF ROBOTIQUE

(43) Date of publication of application: 22.12.2021
(73) Proprietor: Zyrkia Systems, S.L., 41011 Sevilla (ES)
(72) Inventor: Herrera del Toro, Javier, 41011 Sevilla (ES)
(74) Representative: San Martin Alarcia, Esther

(56) References cited:
- EP-A1- 3 241 747
- WO-A1-2016/130847
- WO-A1-2017/019728
- WO-A2-2008/147681
- CN-A- 110 155 266
- JP-A- 2018 192 932
- US-A1- 2017 315 562

## Description

Robotic device for catching and releasing drones, system comprising the robotic device and the drone, and methods for catching and releasing the drone by means of the robotic device

### OBJECT OF THE INVENTION

A first object of the present invention is a robotic device designed for automatically catching and releasing a drone.

A second object of the present invention is a system comprising the robotic device and the drone.

A third and a fourth objects of the present invention are methods for catching and releasing the drone by means of the robotic device.

### PRIOR ART

Every year, there are over 1000 fatalities caused by people falling overboard from a boat in open waters. When a person falls overboard, there is usually no one to help but the crew present in the boat, and there is usually no technical means available for assisting in the rescue but those installed in the boat.

The first and most important task during the rescue is locating the person fallen overboard. Under certain circumstances, such as bad weather conditions, rough sea or strong currents, finding and maintaining visual contact with the person in the water may not be easy. This task becomes even harder when the boat is moving away from the original position where the person fell overboard and needs to take a U turn in order to return to said original position.

In order to solve this problem, there exist a number of technological solutions involving the use of a beacon for electronically marking the position of the person in the water (i.e. by means of GPS coordinates). The use of a drone programmed to find the beacon and to stay above the relevant position in a stationary manner is also known. Then, using the information transmitted from the beacon, and also the visual reference provided by the drone, the crew can drive the boat towards the position where the person is.

A drawback of these rescue systems is related with the way in which the drone is released from the boat. Under bad weather and/or sea conditions, the boat may roll and pitch strongly. The amplitude of the up and down displacement of parts of the deck near the gunwale may be as high as several meters. Under these circumstances, releasing the drone safely is not easy: the drone may hit elements of the boat and fall down. Further, if this task is carried out manually, valuable time is lost while the drone is located, brought up to the deck and set to fly. The person may also get injured if trying to catch the returning drone from the moving deck. No automatic means for carrying out these operations are known in the art.

Thus, at list in this field, a need still exists in the art for systems capable of automatically releasing and catching a drone set to fly in a secure manner.

Document D01 discloses an unmanned aerial vehicle (UAV) storage and launch system, including: a UAV pod having an interior; and a telescoping UAV landing surface disposed in the interior of the UAV pod. The telescoping UAV landing surface may translate up toward a top opening of the UAV pod, translate down into an interior of the UAV pod, or rotate relative to the UAV pod.

Document D02 discloses a multi-unmanned aerial vehicle landing system used for an unmanned ship platform is arranged on the unmanned ship platform, and comprises a ship-borne mechanical arm system, a multi-layer rotating platform and unmanned aerial vehicle fixing devices. Documents WO2008/147681 A2 and EP3241747 A1 introduce other examples of robotic devices for catching/releasing drones.

### SUMMARY OF THE INVENTION

The present document discloses a device and a system comprising the device and a drone, designed for automatically releasing and catching a drone. The present invention is suitable for a large number of applications, such as managing drones for defence and security applications, parcel delivery, fire watching, water rescue, and generally speaking any application involving the use of drones.

In particular, the device of the invention could be installed on a boat for catching/releasing a rescue drone even in bad weather and sea conditions. When a person falls overboard, the occupants of the boat need only to activate the system. A robotic device then automatically extends a robotic arm and releases a rescue drone. The drone may employ known means, such as thermal cameras, for finding the person in the water, and then stays permanently over the person for marking his/her location to the occupants of the boat. Once the person that fell overboard is safe, the drone automatically returns to the boat and is caught by the robotic arm. The system is then ready for a new rescue.

In the present document, the terms "*distal"* and *"proximal"* have the usual meaning as in the medical field. In particular, the term *"distal"* refers to a portion or part closest to a tip of the robotic arm, while the term *"proximal"* refers to a portion or part closest to a base of the robotic arm.

In the present document, the term *"Iongitudinal",* when referred to a link of the robotic arm, refers to the direction of the longest dimension of the link. Conversely, the term *"transversal"* refers to a direction contained in a plane that is perpendicular to the longitudinal direction.

In the present document, the terms *"horizontal"* and *"vertical"* have their conventional meaning in connection to the direction of gravity.

In the present document, the *"lateral direction"* refers to a horizontal direction contained in a first plane that is perpendicular to a second plane essentially containing the robotic arm when in the extended configuration. The *"front-back direction"* refers to a horizontal direction contained in the second plane, the *"front-back direction"* therefore being perpendicular to the *"lateral direction".*

In the present document, the *"base"* of the robotic arm refers to the place where the proximal end of the most proximal link is mechanically supported. For example, in case the robotic arm extends from within a casing, the base would be the portion of the casing where the proximal end of the most proximal link is mechanically coupled. Otherwise, the base could be attached to any support structure, such as the ground or the deck of a boat.

In the present document, the *"tip"* of the robotic arms refers to the most distal portion of the robotic arm located at the distal end of the most distal link. It is also commonly known as effector end.

A first aspect of the present invention is directed to a robotic device essentially comprising the following components: a robotic arm; and a catching/releasing means. These components are now disclosed in further detail.

### a) Robotic arm

The robotic arm, comprising a plurality of links, is configured for alternating between a retracted configuration and an extended configuration.

In the retracted configuration, the robotic arm adopts a compact configuration. There exist several mechanical solutions providing a compact retracted configuration for a robotic arm. Generally speaking, the retracted configuration involves placing the links next to the base of the robotic arm in a position where they are adjacent and parallel ones to the others. The links may juxtapose one another for providing an even more compact configuration where the total volume of the retracted robotic arm is minimum.

In the extended configuration, the robotic arm extends fully or partially such that the tip is in a far away position from the base. In the extended configuration, the robotic arm may extend partially, i.e. at least two of the links are aligned along different directions, such that the distance from the base to the tip is smaller than the sum of the lengths of all the links. Alternatively, the robotic arm may extend fully, i.e. all links being aligned along a common direction, such that the distance from the base to the tip is essentially equal to the sum of the lengths of all the links.

In any case, an angle formed between the base-to-tip direction and a horizontal plane is preferably between 0° and 90°, depending on the relative position of the robotic arm with respect to possible obstacles present in the surroundings. For example, if installed in a boat, obstacles such as sails, gunwale, etc. may require an angle of essentially 45°, such that the tip of the robotic arm in the extended configuration is sufficiently far away both from any part of the boat and from the water surface.

In principle, the robotic arm can adopt any configuration provided it is capable of alternating between the retracted and extended configurations disclosed above. However, in order to provide a particularly useful retracted configuration, the links of the robotic arm, when in the retracted configuration, are aligned in a lateral direction. That is, when the robotic arm retracts, the links adopt a configuration where they are adjacent side-to-side along the lateral direction with their ends next to the base. This configuration is advantageous in that a thickness (dimension along the front-back direction) of a casing possibly housing the robotic arm when retracted is reduced.

The robotic arm may, in principle, have any number of links. However, in a particularly preferred embodiment of the invention, the robotic arm is formed by three links: a base link, an intermediate link, and a final link. This configuration is advantageous in that a convenient compromise is found between simplicity, manoeuvrability, and maximum extension distance.

In order to reduce the force needed to move the robotic arm, the links are preferably lightweight provided they are sufficiently resistant so as to support the weight of a drone coupled to the tip of the final or most distal link. In a preferred embodiment, each link adopts a backhoe architecture comprising essentially three main longitudinal bars interconnected by a number of transversal bars. Further, the weight of the links can be optimised by means of a generative design method where the amount of material needed for a given geometry is fine tuned. The resulting links have an organic backhoe shape having the least possible weight for a given security factor.

The robotic arm further comprises a number of actuation means for causing said robotic arm to alternate between the retracted and extended configurations. The actuation means could be of any kind provided they can cause the robotic arm to operate as disclosed above. However, in a preferred embodiment of the invention where the robotic arm has three links, actuation cylinders are employed. More particularly, the intermediate link is actuated by an actuation cylinder having a proximal end coupled to a fixed structure and a distal end coupled to the intermediate link. That is, a known configuration where an intermediate actuation cylinder has a proximal end coupled to the base link and a distal end coupled to the intermediate link is avoided. The preferred configuration is advantageous in that a weight of the robotic arm in the extended configuration is reduced. Indeed, the weight of the intermediate actuation cylinder needs not be supported by the robotic arm. Thus, the torque needed for supporting the base link in the extended configuration is also reduced.

### b) Catching/releasing means

The catching/releasing means is coupled to a tip of the robotic arm for catching/releasing a drone. Specifically, the present invention discloses a particularly designed catching/releasing means allowing for catching a drone in mid-air even when a support surface where the robotic device is installed, such as the deck of a boat, is moving heavily. Said catching/releasing means essentially comprise a distal diaphragm and a proximal claw. These components are now disclosed in more detail.

### b1) Distal diaphragm

The distal diaphragm is configured for alternating between an open position where a size of an opening of said diaphragm is substantially larger than a size of an enlarged end portion of an elongated grasp body protruding downwards from the drone, and a closed position where the size of the opening of the diaphragm is smaller than the size of said enlarged end portion of said elongated grasp body of the drone. Thus, when the diaphragm is in the open position, the elongated grasp body protruding downwards from the drone can pass through the opening. Since the size, e.g. the diameter, of the opening is substantially larger a size, e.g. the largest radial dimension, of the base enlarged end portion of the elongated grasp body protruding downwards from the drone, it is relatively easy to operate the drone for causing said elongated grasp body to enter the opening. Then, if the distal diaphragm closes the opening, a base portion of said elongated grasp body is grasped by the diaphragm.

In principle, the distal diaphragm can have any configuration provided an opening thereof has the features disclosed above in connection to size and to capability to open and close. For example, the opening may have any shape, including a polygonal shape such as a square, pentagon, hexagon, heptagon, octagon, enneagon, or decagon. However, in a particularly preferred embodiment, the diaphragm has a circular configuration comprising a circular frame having a plurality of moving elements provided circumferentially around the opening, where the moving elements are configured for synchronously moving towards, or away from, a centre of the opening respectively between the closed position and the open position. The mechanism of this diaphragm is similar to that of an iris diaphragm used in photography: the opening can be closed or opened while always maintaining an essentially circular shape. The circular shape is particularly advantageous in that introducing the elongated grasp body of the drone therein is easier than with any other shape.

The main object of the distal diaphragm is to guide the elongated grasp body towards the claw located below. Indeed, the distal diaphragm need not grasp the elongated grasp body firmly, but only closely surround the base of the elongated grasp body such that the enlarged end portion thereof is guided towards a cavity of the claw as the drone continues to descend.

### b2) Proximal claw

The proximal claw is provided behind, and aligned with, the end diaphragm. More particularly, the claw is configured for alternating between an open position where a size of a cavity of said claw is larger than the size of the enlarged end portion of said elongated grasp body of the drone, and a closed position where the claw clamps the enlarged end portion of said elongated grasp body of the drone if present within the cavity. That is, the claw is located essentially behind the diaphragm along a direction of a central axis of the diaphragm, and the openings of the diaphragm and the cavity of the claw are therefore aligned along said direction. Preferably, the catching/releasing means is oriented in such a way that the axis of the diaphragm is essentially vertical. Then, as the drone descends, the enlarged end portion, guided by the diaphragm closed around the base of the elongated grasp body of the drone, reaches the cavity of the claw. The claw then closes for firmly grasping the enlarged end portion.

In principle, the proximal claw may have any configuration provided it can firmly grasp the enlarged end portion. In a particularly preferred embodiment, the claw comprises a plurality of clamp fingers provided circumferentially around the cavity, said clamp fingers being configured for rotating around respective base articulations between the open position and the closed position. The claw may have, e.g. from four to 10 fingers. The clamp fingers may be shaped for adapting to the shape of the enlarged end portion.

The above disclosed catching/releasing means can therefore catch a drone in mid-air provided the drone has a downwardly protruding elongated grasp body comprising a base and an enlarged end portion. The catching operation is least difficult when the drone descends vertically downwards. Therefore, in a particularly preferred embodiment of the invention, the robotic arm further comprises a neck between the tip and the catching/releasing means. Said neck is configured for orienting the catching/releasing means essentially vertically upwards, such that the opening of the diaphragm and the cavity of the claw are oriented essentially vertically upwards, irrespective of an orientation of the final link of said robotic arm, where the final link refers to the most distal link thereof. This configuration is therefore advantageous in that *"threading"* the downwardly protruding elongated grasp body within the opening of the diaphragm is least difficult.

In another preferred embodiment of the invention, the catching/releasing means further comprise a distal detection means. The distal detection means are configured for detecting when the base of the elongated grasp body of the drone passes through the opening of the diaphragm. In still another preferred embodiment of the invention, the catching/releasing means further comprise a proximal detection means. The proximal detection means are configured for detecting the presence of the enlarged end portion of the elongated grasp body of the drone within the cavity of the claw. The detection means could be of any type, such as mechanical, optical or magnetic. Thus, during a catching operation, when the detection means detect that the base of the elongated grasp body passes through the opening of the diaphragm, the diaphragm can be closed, thereby lightly grasping the base of the elongated grasp body for guiding the elongated grasp body downwards towards the claw. Then, still during said catching operation, the proximal detection means detect the presence of the enlarged end portion within the cavity of the claw. The claw can then be closed for firmly grasping said enlarged end portion, thereby securing the drone to the catching/releasing means.

The robotic device of the invention may preferably further comprise a casing configured for housing, when in the retracted configuration, the robotic arm and the catching/releasing means holding the drone. The casing is now described in more detail.

### c) Casing

Preferably, the casing has an essentially parallelepipedic shape having a front and back sides, upper and lower sides, and lateral sides. The distance between the front and back sides is referred herein as thickness, the distance between the upper and lower sides is referred herein as length, and the distance between lateral sides is referred herein as width. Normally, the casing is so installed that the front, back, and lateral sides are vertical, and the upper and lower sides are horizontal. Thus, when the robotic arm is in a retracted configuration where the links are adjacent ones to the others and aligned side-by-side along a lateral direction, the thickness of the casing is brought down to the minimum. The actuation means, as well as the drone itself, are also housed inside the casing when the robotic arm is in the retracted configuration.

In a particularly preferred embodiment of the present invention, each link of the robotic arm has a front panel section coupled to a front facing side of said link when the robotic arm is in the retracted configuration. Then, the front panel sections of each link, when in said retracted configuration, combine for rendering an essentially continuous front closure for the casing. Even more preferably, the panel sections are rectangular such that, when the robotic arm is in the retracted position, the front closure of the casing is formed by a plurality of adjacent rectangular panel sections aligned side-by-side along a lateral direction. The perimetral edges of the panel sections may comprise a watertight lip, such that said perimetral edges of adjacent panel sections, i.e. panel sections corresponding to adjacent links of the robotic arm, and upper and lower edges of the casing, cooperate for rendering a watertight front closure when the robotic arm is retracted. This embodiment is particularly advantageous in that there is no need to open a dedicated front closure of the casing before the robotic arm can be extended. When the robotic arm extends, the front closure automatically "opens", i.e. disassembles into as many front panel sections as there are links. Conversely, there is no need to close such dedicated front closure after the robotic arm is back into its retracted configuration within the casing. When the robotic arm arrives at the retracted configuration within the casing, the front closure is automatically reassembled.

The casing may further comprise fixing means intended for fixing said casing to a support structure, such as the ground or a rail protruding from the gunwale of a boat. The casing may further comprise solar panels for providing power to actuate the robotic arm and/or to charge the batteries of the drone.

The robotic device thus disclosed provides for fast and convenient way to automatically release and catch a drone. The robotic arm automatically extends from within the casing, thus providing a separation between any obstacle and a tip thereof, where the drone is still firmly grasped by the catching/releasing means. Once completely extended, the catching/releasing means releases the drone. The drone then carries out whatever mission it is programmed or guided for, such as a water rescue. Then, the drone returns towards the robotic device and is caught by the catching/releasing means. The particular design of the catching/releasing means ensures that the drone is properly caught even if the surface supporting the robotic arm moves heavily, e.g. when installed in a boat.

The present application further discloses drone for use with the robotic device disclosed above. In particular, the drone comprises a downwardly protruding elongated grasp body comprising a base portion and an enlarged end portion. In this context, this means that the end portion is enlarged with respect to the base portion, i.e. a radial dimension of the end portion is larger than a radial dimension of the base portion. The base portion is preferably cylindrical, and the enlarged end portion is preferably conical. However, other shapes are possible provided they are designed to be respectively closely surrounded by the diaphragm and caught by the claw.

A second aspect of the invention is directed to a system comprising the robotic device disclosed above and the drone disclosed above.

A third aspect of the invention is directed to a method for releasing the above-disclosed drone by means of the above-disclosed robotic device. The release operation begins from an initial situation where robotic arm is retracted with the drone clamped by the catching/releasing means. The release operation then comprises the following steps:
1. Extending the robotic arm from the retracted configuration to the extended configuration.
2. Then, opening the proximal claw from the closed position to the open position.
3. Setting the drone to fly away.
4. Finally, opening the distal diaphragm from the closed position to the open position, thereby releasing the drone.

A fourth aspect of the invention is directed to a method for catching the above-disclosed drone by means of the above-disclosed robotic device. The catching operation begins from an initial situation where the robotic arm is extended with the catching/releasing means in the open position (i.e. both the diaphragm and the claw are in the open position) and the drone is in the air. The catching operation then comprises the following steps:
1. Directing the drone towards the opening of the distal diaphragm.
2. When the base portion of the downwardly protruding elongated grasp body of the drone passes through the opening of the diaphragm, closing the diaphragm around said base portion.
3. Then, when the detection means detect that the enlarged end portion of the downwardly protruding elongated grasp body of the drone enters the cavity of the proximal claw, catching the drone by closing the claw around said enlarged end portion.

### BRIEF DESCRIPTION OF THE DRAWINGS

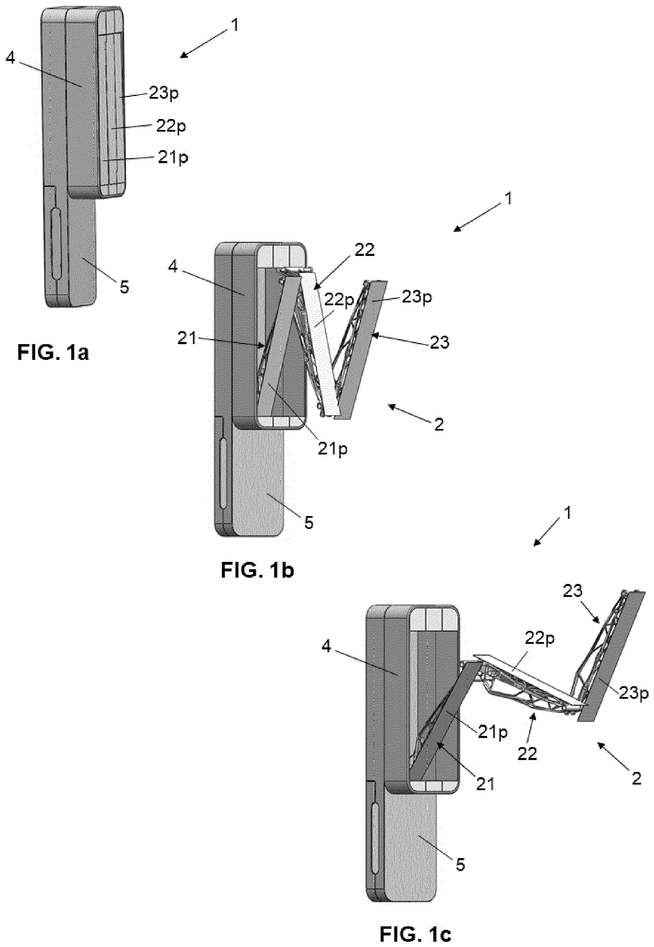

Figs. 1a-c show three perspective views of the robotic device during an extension operation.

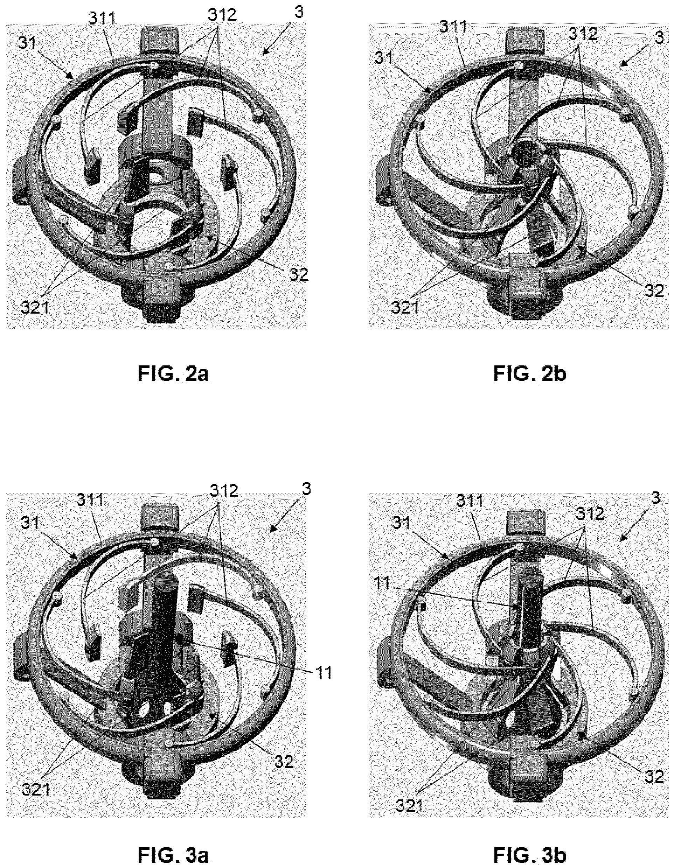

Figs. 2a-2b show perspective views of the catching/releasing means respectively in an open configuration and in a closed configuration.
Figs. 3a-3b show perspective views of the catching/releasing means having inside an elongated grasp body respectively in an open configuration and in a closed configuration.

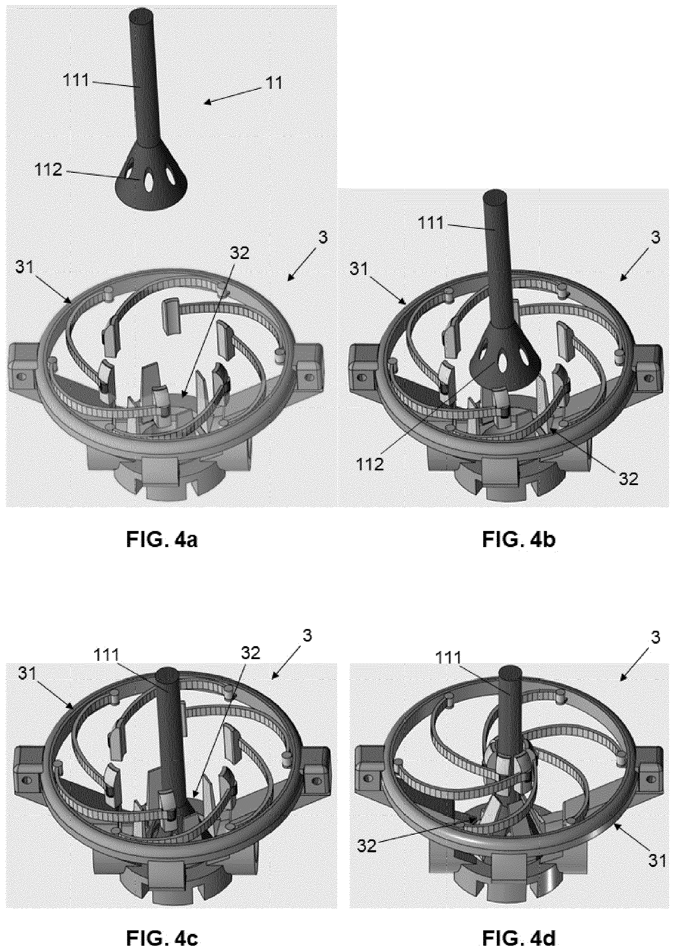

Figs. 4a-d show perspective views of a catching operation carried out by the catching/releasing means.

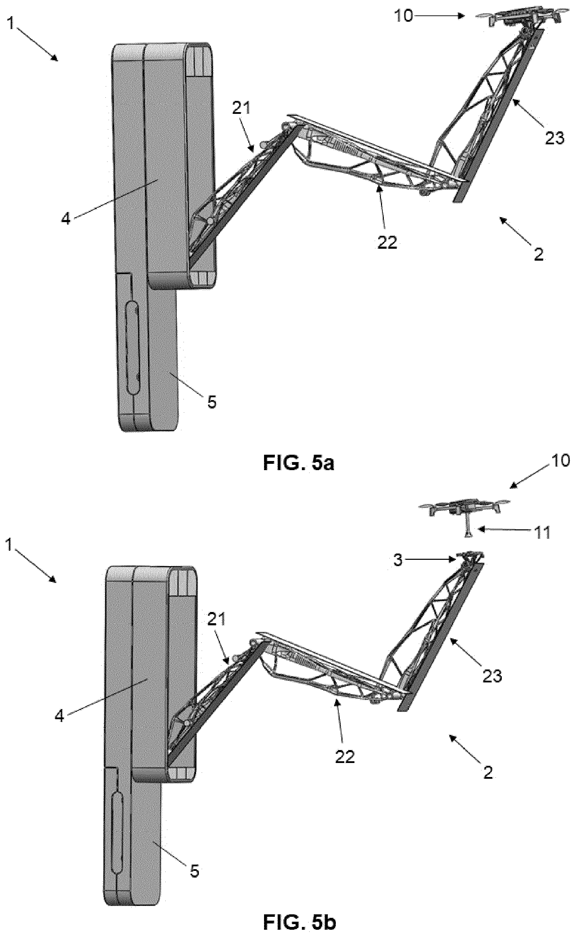

Figs 5a-b show perspective views of the whole robotic device during a releasing operation.

### DESCRIPTION OF A PREFERRED EMBODIMENT

The robotic device (1) of the present exemplary embodiment is essentially formed by a casing (4) housing the robotic arm (2) in the retracted configuration with the catching/releasing means attached to a tip of said robotic arm (2).

The casing (4) has an essentially parallelepipedic shape formed by two lateral walls, an upper wall, a lower wall, a front wall and a back wall. The back wall of the casing (4) is attached to a post (5) firmly anchored to a fixed structure. The fixed structure may be the ground or, when installed in a boat, the deck. The casing (4) is therefore raised with respect to ground level, thus providing an initial distance between a base of the robotic arm (2) and said ground or deck.

The robotic arm (2) is formed by three links, namely a base link (21), an intermediate link (22) and a final link (23). Each link (21, 22, 23) has a backhoe structure essentially formed by three longitudinal bars interconnected by several transversal or inclined reinforcement bars. In the present exemplary embodiment, this structure was rendered by a generative design process for obtaining links (21, 22, 23) with the least possible weight. The resulting links (21, 22, 23) have a somewhat organic shape where the longitudinal bars and transversal bars are not completely straight

The base link (21) as a proximal end rotatably coupled through a lower wall of the casing (4) to the post (5). A base actuation cylinder has a proximal end connected to an inner side of the back wall and a distal end connected to the base link (21). The intermediate link (22) has a proximal end rotatably coupled to a distal end of the base link (21). An intermediate actuation cylinder has a proximal end connected to an inner side of the back wall and a distal end connected to the intermediate link (21). The final link (23) has a proximal end rotatably coupled to a distal end of the intermediate link (22). A final actuation cylinder has a proximal end coupled to the intermediate link (22) and a distal end coupled to the final link (23). The rotatable couplings are formed by joints designed for allowing rotation along laterally oriented respective axis. Thus, the movements of all three links (21, 22, 23) of the robotic arm (2) are essentially contained within respective vertical planes oriented along a front-back direction. Note also that the rotatable joints between the base link (21) and the intermediate link (22), and between the intermediate link (22) and the final link (23) are so configured that each link (21, 22, 23) moves within three distinct and parallel such planes. Therefore, when in the retracted configuration, the three links (21, 22, 23) are aligned side-by-side along a lateral direction.

Each link (21, 22, 23) also comprises a rectangular front panel section (21p, 22p, 23p) attached to a front side of the link (21, 22, 23) when in the retracted configuration. That is, the front panel section (21p, 22p, 23p) is fixed to a side of each link (21, 22, 23) that, when the robotic arm (2) is completely retracted, each front panel section (21p, 22p, 23p) is oriented horizontally frontwards. Since the links (21, 22, 23) align side-by-side along a lateral direction when the robotic arm (2) is completely retracted, then the front panel sections (21p, 22p, 23p) also align laterally for conforming a flat front closure for the casing (4). The casing (4) then comprises fixed upper, lower, back and lateral walls, and the front wall is constituted by the front closure itself. Further, the peripheral edges of the front panel sections (21p, 22p, 23p) may comprise watertight lips, as well as the lateral, upper and lower edges of the casing (4). Thus, when the robotic arm (2) is completely retracted and the front closure is formed, the robotic arm (2) is protected from the outside environment. This structure dispenses with the need for the casing (4) to have a door or the like: the front closure automatically appears when the robotic arm (2) reaches the retracted configuration.

At the tip of the final link (23) of the robotic arm (2), i.e. the distal end of the final link (23), a catching/releasing means (3) is provided. The connection between the catching/releasing means (3) and said tip is carried out by means of a neck ensuring that the catching/releasing means (3) is oriented vertically upwards. A vertical orientation makes the catching and releasing operation least difficult.

In order for the catching/releasing means for catching and releasing the drone (10), said drone (10) must comprise an elongated grasp body (11). The elongated grasp body (11) in the present exemplary embodiment is formed by cylindrical base (111) having a first end firmly attached to the lower side of the drone (10) and a second end where an enlarged end portion (112) is provided. The enlarged end portion (112) has a conical shape, where the larges diameter of the cone is larger than the diameter of the cylindrical base (111).

The catching/releasing means (3) is particularly designed for grasping the above-disclosed elongated grasp body (11). Thereto, the catching/releasing means is formed by a distal diaphragm (31) and a proximal claw (32).

The distal diaphragm (31) is positioned at a distalmost position of the catching/releasing means (3), and is essentially formed by a circular frame (311) having a plurality of moving elements (312) provided circumferentially around the opening. Each moving element (312) has an outer end slidably attached to an inner face of the circular frame (311) and an inner end that, when the outer end slides from an open position to a closed position, moves from a radially external position to a radially internal position. An essentially circular opening is then formed between the inner ends of all the moving elements (312), where said opening can have a first, large radius when the diaphragm (31) is in the open position and a second, small radius when the diaphragm (31) is in the closed position. Opening/closing means (not shown in the figures) for causing the diaphragm (31) alternate from the open and closed positions are provided. In the open position, the diameter of the opening of the diaphragm (31) is substantially larger than a diameter of an enlarged end portion (112) of an elongated grasp body (11) of the drone (10). Thus, guiding the drone (10) for causing the enlarged end portion (112) pass through the opening is least difficult.

The claw (32) is provided behind the distal diaphragm (31) along an axis of said diaphragm (32). When in use, generally speaking the claw (32) will be positioned vertically under the diaphragm (31), since the neck provided between the distal tip of the robotic arm (2) and the catching/releasing means (3) ensures that the catching/releasing means (3) is oriented vertically. Thus, when performing a catching operation, the elongated grasp body (11) of the drone (10) passing through the opening of the diaphragm (31) reaches the claw (32). The claw (32) is essentially formed by a number of clamp fingers (321) provided circumferentially around a cavity thereof. The clamp fingers (321) are rotatable between an open position and a closed position. When in the open position, a size of the cavity is larger than the diameter of the enlarged end portion (112) of the elongated grasp body (11) of the drone (10), such that said enlarged end portion (112) can enter said cavity. In the closed position, the fingers (311) of the claw (32) clamp the enlarged end portion (112) of the elongated grasp body (11) of the drone (10) when present inside the cavity.

The catching/releasing means (3) may also comprise distal and proximal detection means. The distal detection means are configured for detecting the presence of the base (111) of the elongated grasp body (11) within the opening of the diaphragm (31). Thus, when performing a catching operation, the diaphragm (31) closes when the base (111) of the elongated grasp body (11) is detected by the distal means. The diaphragm (31) then closely surrounds said base (111), thus preventing the elongated grasp body (11) as a whole from escaping. The proximal detection means are configured for detecting the presence of the enlarged end portion (112) of the elongated grasp body (11) within the cavity of the claw (32). Thus, when performing a catching operation, the claw (32) closes when the enlarged end portion (112) of the elongated grasp body (11) is detected by the proximal detection means. The claw (32) then grasps said enlarged end portion (112), thereby firmly securing the drone (10).

Thus, when performing a catching operation, the drone (10) is first commanded to go to the position where the robotic device (1) of the invention is provided. The robotic arm (2) is in the extended configuration, with the catching/releasing means (3) provided at the tip oriented vertically by means of a suitable of the neck. The drone (10) then flies downwards from above, such that the elongated grasp body (11) descents into the diaphragm (31). Once the enlarged end portion (112) has passed through the opening of the diaphragm (31), the diaphragm (31) closes. The base (111) of the elongated grasp body (11) is then closely surrounded by the inner ends of the moving elements (312) of the diaphragm (31), such that the drone (10) can no longer escape from the catching/releasing means (3). Then, the drone (10) continues to descend, guided and centred by the diaphragm (31) surrounding the base (111) of the elongated grasp body (11), until the enlarged end portion (112) enters the cavity of the claw (32). The proximal detection means detect this situation and the claw (32) then closes, thus firmly grasping the enlarged end portion (112). The robotic arm (2) can then retract from the extended configuration towards the retracted configuration, where both said robotic arm (2) and the drone (10) are housed within the casing (4). The closure panel automatically assembles as soon as the robotic arm (2) has reached said retracted configuration.

When performing a releasing operation, the robotic arm (2) first extends from the retracted configuration towards the extended configuration. The closure panel automatically disassembles as soon as the robotic arm (2) leaves the retracted configuration. Then, the claw (32) opens, thus releasing the enlarged end portion (112). The drone (10) is set to fly away, but it is still retained by the diaphragm (31) that, in the closed position, does not allow the enlarged end portion (112) to pass through. Finally, the diaphragm (31) opens, and the drone (10) flies away.

## Claims

1. Robotic device (1) for catching and releasing drones, comprising:
- a robotic arm (2) comprising a plurality of links (21, 22, 23), where the robotic arm (2) is configured for alternating between a retracted configuration and an extended configuration; and
- a catching/releasing means (3) coupled to a tip of the robotic arm (2) for catching/releasing a drone (10);
**characterized in that** the catching/releasing means comprises:
- a distal diaphragm (31) configured for alternating between an open position where a size of an opening of said diaphragm (31) is larger than a size of an enlarged end portion (112) of an elongated grasp body (11) protruding downwards from the drone (10), and a closed position where the size of the opening of the diaphragm (31) is smaller than the size of said enlarged end portion (112) of said elongated grasp body (11) of the drone (10); and
- a proximal claw (32) provided behind, and aligned with, the distal diaphragm (31), where the claw (32) is configured for alternating between an open position where a size of a cavity of said claw (32) is larger than the size of the enlarged end portion (112) of said elongated grasp body (11) of the drone (10), and a closed position where the claw (32) clamps the enlarged end portion (112) of said elongated grasp body (11) of the drone (10) if present within the cavity.

2. Robotic device (1) according to claim 1, where the diaphragm (31) comprises a circular frame (311) having a plurality of moving elements (312) provided circumferentially around the opening, said moving elements (312) being configured for synchronously moving towards, or away from, a centre of the opening respectively between the closed position and the open position.

3. Robotic device (1) according to any of claims 1-2, where the claw (32) comprises a plurality of clamp fingers (321) provided circumferentially around the cavity, said clamp fingers (321) being configured for rotating around respective base articulations between the open position and the closed position.

4. Robotic device according to any of claims 1-3, further comprising a neck between the tip and the catching/releasing means (3), where the neck is configured for orienting the catching/releasing means (3) essentially vertically upwards, such that the opening of the diaphragm (31) and the cavity of the claw (32) are oriented essentially vertically upwards, irrespective of an orientation of a final link (23) of the robotic arm.

5. Robotic device (1) according to any of the previous claims, where the links (21, 22, 23) of the robotic arm (2), when in the retracted configuration, are aligned in a lateral direction.

6. Robotic device (1) according to any of the previous claims, further comprising a casing (4) configured for housing, when in the retracted configuration, the robotic arm (2) and the catching/releasing means (3) holding the drone (10).

7. Robotic device (1) according to claim 6, where each link (21, 22, 23) of the robotic arm (2) has a front panel section (21p, 22p, 23p) coupled to a front facing side of said link (21, 22, 23) when the robotic arm (2) is in the retracted configuration, such that the front panel sections (21p, 22p, 23p) of each link (21, 22, 23), when in said retracted configuration, combine for rendering an essentially continuous front closure for the casing (4).

8. Robotic device (1) according to claim 7, where the panel sections (21p, 22p, 23p) are rectangular such that, when the robotic arm (2) is in the retracted position, the front closure of the casing (4) is formed by a plurality of adjacent rectangular panel sections (21p, 22p, 23p) aligned along a lateral direction.

9. Robotic device (1) according to any of the previous claims, where the robotic arm (2) is formed by a base link (21), an intermediate link (22), and the final link (23).

10. Robotic device (1) according to claim 9, where the intermediate link (22) is actuated by an intermediate actuation cylinder having a proximal end coupled to a fixed structure and a distal end coupled to the intermediate link (22).

11. System comprising the robotic device (1) of any of claims 1-10 and a drone (10) comprising a downwardly protruding elongated grasp body (11) comprising a base portion (111) and an enlarged end portion (112).

12. Method for releasing a drone (10) by means of the robotic device (1) of any of claims 1-10, where the drone (10) comprises a downwardly protruding elongated grasp body (11) comprising a base portion (111) and an enlarged end portion (112), starting from an initial situation where robotic arm (2) is retracted and the drone (10) is clamped by the catching/releasing means (3), **characterized by** comprising the following steps:
- extending the robotic arm (2) from the retracted configuration to the extended configuration;
- then, opening the proximal claw (32) from the closed position to the open position;
- setting the drone (10) to fly away; and
- finally, opening the distal diaphragm (31) from the closed position to the open position, thereby releasing the drone.

13. Method for catching a drone (10) by means of the robotic device (1) of any of claims 1-10, where the drone (10) comprises a downwardly protruding elongated grasp body (11) comprising a base portion (111) and an enlarged end portion (112), starting from an initial situation where the robotic arm (2) is extended with the catching/releasing means (3) in the open positions and the drone (10) is in the air, **characterized by** comprising the following steps:
- directing the drone (10) towards the opening of the distal diaphragm (31);
- when the base portion (111) of the downwardly protruding elongated grasp body (11) of the drone (10) passes through the opening of the diaphragm (31), closing the diaphragm (31) around said base portion (111); and
- when the enlarged end portion (112) of the downwardly protruding elongated grasp body (11) enters the cavity of the claw (32), catching the drone (10) by closing the claw (32) around said enlarged end portion (112).

## Patentansprüche

1. Eine Robotervorrichtung (1) zum Fangen und Freigeben von Drohnen, umfassend:
- einen Roboterarm (2), der eine Vielzahl von Gliedern (21, 22, 23) umfasst, wobei der Roboterarm (2) konfiguriert ist, zwischen einer eingefahrenen Konfiguration und einer ausgefahrenen Konfiguration zu wechseln; und
- ein Fang-/Freigabemittel (3), das mit einer Spitze des Roboterarms (2) gekoppelt ist, um eine Drohne (10) einzufangen/freizugeben;
**dadurch gekennzeichnet, dass** die Fang-/Freigabeeinrichtung Folgendes umfasst:
- eine distale Membran (31), die konfiguriert ist, zwischen einer offenen Position, in der eine Größe einer Öffnung der Membran (31) größer ist als eine Größe eines vergrößerten Endabschnitts (112) eines länglichen Greifkörpers (11), der von der Drohne (10) nach unten vorsteht, und einer geschlossenen Position, in der die Größe der Öffnung der Membran (31) kleiner ist als die Größe des vergrößerten Endabschnitts (112) des länglichen Greifkörpers (11) der Drohne (10), zu wechseln; und
- einen proximaler Greifer (32), der hinter der distalen Membran (31) angebracht und an dieser ausgerichtet ist, wobei der Greifer (32) konfiguriert ist, um zwischen einer offenen Position, in der eine Größe eines Hohlraums des Greifers (32) größer als die Größe des vergrößerten Endabschnitts (112) des länglichen Greifkörpers (11) der Drohne (10) ist, und einer geschlossenen Position, in der der Greifer (32) den vergrößerten Endabschnitt (112) des länglichen Greifkörpers (11) der Drohne (10) festklemmt, wenn sie sich innerhalb des Hohlraums befindet, zu wechseln.

2. Robotervorrichtung (1) nach Anspruch 1, wobei die Membran (31) einen kreisförmigen Rahmen (311) mit einer Vielzahl von Bewegungselementen (312) umfasst, die in Umfangsrichtung um die Öffnung herum vorgesehen sind, wobei die Bewegungselemente (312) so konfiguriert sind, dass sie sich synchron zu einem Zentrum der Öffnung hin bzw. von diesem weg zwischen der geschlossenen Position und der offenen Position bewegen.

3. Robotervorrichtung (1) nach einem der Ansprüche 1 bis 2, wobei der Greifer (32) eine Vielzahl von Klemmfingern (321) umfasst, die in Umfangsrichtung um den Hohlraum herum vorgesehen sind, wobei die Klemmfinger (321) zum Drehen um jeweilige Basisgelenke zwischen der offenen Position und der geschlossenen Position konfiguriert sind.

4. Robotervorrichtung nach einem der Ansprüche 1 bis 3, ferner umfassend einen Hals zwischen der Spitze und der Fang-/Freigabeeinrichtung (3), wobei der Hals zum Ausrichten der Fang-/Freigabeeinrichtung (3) im Wesentlichen vertikal nach oben konfiguriert ist, so dass die Öffnung der Membran (31) und der Hohlraum des Greifers (32) im Wesentlichen vertikal nach oben ausgerichtet sind, unabhängig von einer Ausrichtung eines Endgliedes (23) des Roboterarms.

5. Robotervorrichtung (1) nach einem der vorhergehenden Ansprüche, wobei die Verbindungsglieder (21, 22, 23) des Roboterarms (2), wenn sie sich in der eingefahrenen Konfiguration befinden, in einer lateralen Richtung ausgerichtet sind.

6. Robotervorrichtung (1) nach einem der vorhergehenden Ansprüche, die des Weiteren ein Gehäuse (4) umfasst, das so konfiguriert ist, dass es, wenn es sich in der eingezogenen Konfiguration befindet, den Roboterarm (2) und die Fang-/Freigabeeinrichtung (3), die die Drohne (10) hält, aufnimmt.

7. Robotervorrichtung (1) nach Anspruch 6, wobei jedes Verbindungsglied (21, 22, 23) des Roboterarms (2) einen vorderen Plattenabschnitt (21p, 22p, 23p) aufweist, der mit einer nach vorne weisenden Seite des Verbindungsglieds (21, 22, 23) gekoppelt ist, wenn sich der Roboterarm (2) in der eingezogenen Konfiguration befindet, so dass die vorderen Plattenabschnitte (21p, 22p, 23p) jedes Verbindungsglieds (21, 22, 23), wenn sie sich in der eingezogenen Konfiguration befinden, kombiniert werden, um einen im Wesentlichen kontinuierlichen vorderen Verschluss für das Gehäuse (4) zu bilden.

8. Robotervorrichtung (1) nach Anspruch 7, wobei die Plattenabschnitte (21p, 22p, 23p) rechteckig sind, so dass, wenn sich der Roboterarm (2) in der zurückgezogenen Position befindet, der vordere Verschluss des Gehäuses (4) durch eine Vielzahl von benachbarten rechteckigen Plattenabschnitten (21p, 22p, 23p) gebildet wird, die entlang einer lateralen Richtung ausgerichtet sind.

9. Robotervorrichtung (1) nach einem der vorhergehenden Ansprüche, wobei der Roboterarm (2) durch ein Basisglied (21), ein Zwischenglied (22) und das Endglied (23) gebildet ist.

10. Robotervorrichtung (1) nach Anspruch 9, wobei das Zwischenglied (22) durch einen Zwischenbetätigungszylinder betätigt wird, der ein proximales Ende, das mit einer festen Struktur gekoppelt ist, und ein distales Ende, das mit dem Zwischenglied (22) gekoppelt ist, aufweist.

11. System, das die Robotervorrichtung (1) nach einem der Ansprüche 1 bis 10 und eine Drohne (10) umfasst, die einen nach unten vorstehenden länglichen Greifkörper (11) aufweist, der einen Basisabschnitt (111) und einen vergrößerten Endabschnitt (112) hat.

12. Verfahren zum Freigeben einer Drohne (10) mittels der Robotervorrichtung (1) nach einem der Ansprüche 1 bis 10, wobei die Drohne (10) einen nach unten vorstehenden länglichen Greifkörper (11) aufweist, der einen Basisabschnitt (111) und einen vergrößerten Endabschnitt (112) hat, beginnend mit einer Ausgangssituation, in der der Roboterarm (2) zurückgezogen ist und die Drohne (10) durch die Fang-/Freigabeeinrichtung (3) festgeklemmt wird, **dadurch gekennzeichnet, dass** es die folgenden Schritte umfasst:
- Ausfahren des Roboterarms (2) aus der eingefahrenen Konfiguration in die ausgefahrene Konfiguration;
- dann Öffnen des proximalen Greifers (32) von der geschlossenen Position in die offene Position;
- Einstellen der Drohne (10), um wegzufliegen; und
- schließlich Öffnen der distalen Membran (31) von der geschlossenen Position in die offene Position, wodurch die Drohne freigegeben wird.

13. Verfahren zum Fangen einer Drohne (10) mittels der Robotervorrichtung (1) nach einem der Ansprüche 1 bis 10, wobei die Drohne (10) einen nach unten vorstehenden länglichen Greifkörper (11) umfasst, der einen Basisabschnitt (111) und einen vergrößerten Endabschnitt (112) aufweist, beginnend mit einer Ausgangssituation, in der der Roboterarm (2) ausgefahren wird, wenn sich die Fang-/Freigabeeinrichtung (3) in den offenen Positionen befindet und sich die Drohne (10) in der Luft befindet, **dadurch gekennzeichnet, dass** es die folgenden Schritte umfasst:
- Ausrichten der Drohne (10) auf die Öffnung der distalen Membran (31);
- wenn der Basisabschnitt (111) des nach unten vorstehenden länglichen Greifkörpers (11) der Drohne (10) durch die Öffnung der Membran (31) hindurchtritt, Schließen der Membran (31) um den Basisabschnitt (111); und
- wenn der vergrößerte Endabschnitt (112) des nach unten vorstehenden länglichen Greifkörpers (11) in den Hohlraum des Greifers (32) eintritt, Einfangen der Drohne (10) durch Schließen des Greifers (32) um den vergrößerten Endabschnitt (112) herum.

## Revendications

1. Dispositif robotisé (1) pour attraper et libérer des drones, comprenant:
- un bras robotique (2) comprenant une pluralité de liaisons (21, 22, 23), le bras robotique (2) étant configuré pour alterner entre une configuration rétractée et une configuration étendue; et
- un moyen d'accrochage/relâchement (3) couplé à une extrémité du bras robotique (2) pour accrocher/relâcher un drone (10);
qui se **caractérise par le fait que** le moyen de capture/libération comprend:
- un diaphragme distal (31) configuré pour alterner entre une position ouverte dans laquelle la taille d'une ouverture dudit diaphragme (31) est supérieure à la taille d'une partie d'extrémité élargie (112) d'un corps de préhension allongé (11) faisant saillie vers le bas depuis le drone (10), et une position fermée dans laquelle la taille de l'ouverture du diaphragme (31) est inférieure à la taille de ladite partie d'extrémité élargie (112) dudit corps de préhension allongé (11) du drone (10); et
- une griffe proximale (32) disposée derrière le diaphragme distal (31) et alignée avec celui-ci, la griffe (32) étant configurée pour alterner entre une position ouverte dans laquelle une taille d'une cavité de ladite griffe (32) est supérieure à la taille de la partie d'extrémité élargie (112) dudit corps de préhension allongé (11) du drone (10), et une position fermée dans laquelle la griffe (32) serre la partie d'extrémité élargie (112) dudit corps de préhension allongé (11) du drone (10) si elle est présente dans la cavité.

2. Dispositif robotique (1) selon la revendication 1, dans lequel le diaphragme (31) comprend un cadre circulaire (311) ayant une pluralité d'éléments mobiles (312) prévus en circonférence de l'ouverture, lesdits éléments mobiles (312) étant configurés pour se déplacer de manière synchrone vers, ou s'éloigner d'un centre de l'ouverture, respectivement entre la position fermée et la position ouverte.

3. Dispositif robotique (1) selon l'une quelconque des demandes 1 à 2, dans lequel la griffe (32) comprend une pluralité de doigts de serrage (321) prévus en circonférence de la cavité, lesdits doigts de serrage (321) étant configurés pour tourner autour des articulations de base respectives entre la position ouverte et la position fermée.

4. Dispositif robotique selon l'une quelconque des revendications 1 à 3, comprenant en outre un col entre la pointe et le moyen d'accrochage/libération (3), où le col est configuré pour orienter le moyen d'accrochage/libération (3) de manière essentiellement verticale vers le haut, de sorte que l'ouverture du diaphragme (31) et la cavité de la griffe (32) sont orientées de manière essentiellement verticale vers le haut, quelle que soit l'orientation d'une liaison finale (23) du bras robotisé.

5. Dispositif robotique (1) selon l'une quelconque des revendications précédentes, dans lequel les biellettes (21, 22, 23) du bras robotique (2), lorsqu'elles sont dans la configuration rétractée, sont alignées dans une direction latérale.

6. Dispositif robotisé (1) selon l'une quelconque des revendications précédentes, comprenant en outre un boîtier (4) configuré pour loger, lorsqu'il est dans la configuration rétractée, le bras robotisé (2) et les moyens d'accrochage/relâchement (3) maintenant le drone (10).

7. Dispositif robotisé (1) selon la revendication 6, dans lequel chaque biellette (21, 22, 23) du bras robotisé (2) a une section de panneau avant (21p, 22p, 23p) couplée à un côté tourné vers l'avant de ladite biellette (21, 22, 23) lorsque le bras robotisé (2) est dans la configuration rétractée, de telle sorte que les sections de panneau avant (21p, 22p, 23p) de chaque biellette (21, 22, 23), lorsqu'elles sont dans ladite configuration rétractée, se combinent pour présenter essentiellement une fermeture avant continue pour le boîtier (4).

8. Dispositif robotisé (1) selon la revendication 7, dans lequel les sections de panneau (21p, 22p, 23p) sont rectangulaires, de sorte que, lorsque le bras robotisé (2) est dans la position rétractée, la fermeture avant du boîtier (4) soit formée par une pluralité de sections de panneau rectangulaires adjacentes (21p, 22p, 23p) alignées le long d'une direction latérale

9. Dispositif robotique (1) selon l'une quelconque des revendications précédentes, dans lequel le bras robotique (2) est formé par une biellette de base (21), une biellette intermédiaire (22) et la biellette terminale (23).

10. Dispositif robotique (1) selon la revendication 9, dans lequel la bielle intermédiaire (22) est actionnée par un cylindre d'actionnement intermédiaire ayant une extrémité proximale couplée à une structure fixe et une extrémité distale couplée à la bielle intermédiaire (22).

11. Système comprenant le dispositif robotisé (1) selon l'une quelconque des revendications 1 à 10 et un drone (10) comprenant un corps de préhension allongé (11) faisant saillie vers le bas comprenant une partie de base (111) et une partie terminale agrandie (112).

12. Procédé de libération d'un drone (10) au moyen du dispositif robotisé (1) selon l'une quelconque des revendications 1 à 10, dans lequel le drone (10) comprend un corps de préhension allongé (11) faisant saillie vers le bas, comprenant une partie de base (111) et une partie terminale élargie (112), à partir d'une situation initiale dans laquelle le bras robotisé (2) est rétracté et le drone (10) est serré par le moyen d'accrochage/libération (3), **caractérisé en ce qu'**il comprend les étapes suivantes:
- étendre le bras robotique (2) de la configuration rétractée à la configuration étendue configuration;
- puis, ouvrir la griffe proximale (32) de la position fermée à la position ouverte
- régler le drone (10) pour qu'il s'envole; et
- enfin, ouvrir le diaphragme distal (31) de la position fermée à la position ouverte, libérant ainsi le drone.

13. Procédé pour attraper un drone (10) au moyen du dispositif robotique (1) selon l'une quelconque des revendications 1 à 10, dans lequel le drone (10) comprend un corps de préhension allongé faisant saillie vers le bas (11) comprenant une partie de base (111) et une partie terminale agrandie (112), à partir d'une situation initiale dans laquelle le bras robotique (2) est étendu avec les moyens de capture/libération (3) dans les positions ouvertes et le drone (10) est dans l'air, **se caractérisant par le fait qu'**il comprend les étapes suivantes:
- diriger le drone (10) vers l'ouverture du diaphragme distal (31);
- lorsque la partie de base (111) du corps de préhension allongé (11) faisant saillie vers le bas du drone (10) passe à travers l'ouverture du diaphragme (31), fermant le diaphragme (31) autour de ladite partie de base (111); et
- lorsque la partie terminale élargie (112) du corps de préhension allongé (11) faisant saillie vers le bas pénètre dans la cavité de la griffe (32), saisissant le drone (10) en fermant la griffe (32) autour de ladite partie terminale élargie (112).
